# EUROPEAN PATENT APPLICATION

(11) **EP 4 640 421 A1**
(43) Date of publication of application: **29.10.2025**
(21) Application number: 24171496.3
(22) Date of filing: 22.04.2024
(51) Int. Cl.: B31F 5/00, B31B 50/62, B31B 70/62, B29C 65/08, B65B 51/22, B29C 65/00

(54) **ULTRASONIC SEALING OF COATED PAPER OR PAPERBOARD**

(71) Applicant: Billerud Aktiebolag (publ), 169 27 Solna (SE)
(72) Inventor: LARSSON, Johan A., 805 98 Gävle (SE); LINDSTRÖM, Ove, 952 91 Kalix (SE)
(74) Representative: Kransell & Wennborg KB

(57) **Abstract**

The present disclosure provides a method of ultrasonic sealing of a coated paper or paperboard, wherein the method comprises the following steps:
a) providing a paper or paperboard coated with a coating comprising a binder;
b) wetting at least part of the coating with water; and
c) sealing a wetted portion of the coating from step b) to a paper or paperboard surface by ultrasonic sealing to create a seal, wherein the total coat weight in the formed sealing is ≤ 35 g/m².

## Description

### TECHNICAL FIELD

The present disclosure relates to the field of ultrasonic sealing of coated paper or paperboard.

### BACKGROUND

There is a constant strive to reduce the usage of plastic materials in packaging. One route is to use paper-based packaging. To form a package from paper or paperboard, a sealing needs to be formed between surfaces of paper.

Commonly, heat-sealing is used to join two surfaces of paper or paperboard. In such case, a particular coating made of a heat-sealable polymer such as polyethylene is typically applied.

One alternative technique to heat-sealing is ultrasonic sealing, also known as ultrasonic joining. An example of a device used for ultrasonic sealing of paper is described in US 9,399,330 B2 by Syntegon Technology GmbH.

However, not all papers or paperboards are suitable for ultrasonic sealing.

### SUMMARY

The present disclosure provides for a method of expanding the use of ultrasonic sealing of paper and paperboard.

Accordingly, the present disclosure provides a method of ultrasonic sealing of a coated paper or paperboard, wherein the method comprises the following steps:
a) providing a paper or paperboard coated with a coating comprising a binder;
b) wetting at least part of the coating with water; and
c) sealing a wetted portion of the coating from step b) to a paper or paperboard surface by ultrasonic sealing to create a seal, wherein the total coat weight in the formed sealing is ≤ 35 g/m².

The present disclosure further provides a method of forming a sealed package or container as well as a formed package or container comprising the ultrasonically sealed paper or paperboard.

Ultrasonic sealing has previously been shown on uncoated paper or paperboard where the access to the surface of the paper or paperboard is high. It has now been realized that also coated paper or paperboard can be used in ultrasonic sealing and sufficiently strong seals produced if the coat weight in the seal is properly balanced. Thereby, a paper or paperboard can have both desirable properties in form of printing properties and/or barrier properties, as well as be sealed without addition of any additional sealant layer, which is beneficial from a cost and environmental perspective.

### DETAILED DESCRIPTION

As a first aspect of the present disclosure there is provided a method of ultrasonic sealing of a coated paper or paperboard, wherein the method comprises the following steps:
a) providing a paper or paperboard coated with a coating comprising a binder;
b) wetting at least part of the coating with water; and
c) sealing a wetted portion of the coating from step b) to a paper or paperboard surface by ultrasonic sealing to create a seal, wherein the total coat weight in the formed sealing is ≤ 35 g/m².

Ultrasonic sealing is the same as ultrasonic joining as well as ultrasonic welding. A suitable device as well as the technique itself is described in detail in US 9,399,335 B2 by Syntegon Technology GmbH. The paper or paperboard is introduced in a gap between a sonotrode and an anvil and by causing the sonotrode to oscillate ultrasonically the paper or paperboard is ultrasonically sealed.

The portion of the coated paper or paperboard to be sealed is wetted with water to moisturize the surface of the paper or paperboard. The water is needed to form a strong seal in the ultrasonic sealing. Without being bound to any theory it is believed that the water penetrates the surface of the paper or paperboard and softens the fibres so that they can re-form when the ultrasonic sealing is conducted. For the avoidance of doubt, the wetted part may be greater than the portion that is subsequently sealed. In one embodiment, essentially the whole coating of the paperboard is wetted in step b), whereas only a minor portion of that wetted side is sealed in step c). It is, however, preferred not to wet a bigger part of the coating than needed for the formation of the seal as the wetting can deteriorate the surface of the paper or paperboard that will be visible to consumers. Preferably, the paper or paperboard surface of step c) is also wetted.

The total coat weight in the formed sealing is ≤ 35 g/m². Accordingly, if two coated surfaces are joined, the total coat weight of both surfaces combined are ≤ 35 g/m². For example, in case of a coated paper or paperboard having a coat weight of 25 g/m², the paper or paperboard surface to seal the coated paper or paperboard with has a coat weight of no more than 10 g/m². Likewise, in case the coated paper or paperboard has a coat weight of 35 g/m², the paper or paperboard surface to be sealed with is uncoated at least in the area of the formed seal. The inventors have realized that such total coat weight efficiently combines the surface properties provided by the coating, e.g. printing and/or barrier properties, with the possibility to form a strong seal. The total coat weight in the formed sealing may be even lower, such as ≤ 30 g/m². A typical lower limit may be ≥ 1.5 g/m². Accordingly, in one embodiment, the total coat weight in the formed sealing is ≤ 35 g/m² and ≥ 1.5 g/m². In another embodiment, the total coat weight in the formed sealing is ≤ 35 g/m² and ≥ 4 g/m². In yet another embodiment, the total coat weight in the formed sealing is ≤ 35 g/m² and ≥ 8 g/m².

There is no limitation in type of paper or paperboard. The paper or paperboard can be made from fibres being bleached or unbleached. The fibres can be made from softwood fibres and/or hardwood fibres and/or other cellulosic fibres. Additives typically used in the furnishes in papermaking have typically been added to the furnishes, such as sizing agents, strengths agents, pigments and pH regulators. Regarding the paperboard, the paperboard can be a one-ply paperboard or a multi-ply paperboard. An example of a multi-ply paperboard is a multi-ply paperboard having outer plies of chemical pulp and one, or several, middle pl(y/ies) comprising mechanical pulp, e.g. Chemi-ThermoMechanical pulp (CTMP). The coating may be arranged on a layer of the paper or paperboard comprising at least 90 % by dry weight of chemical pulp, such as at least 95 % by dry weight of chemical pulp.

The coated paper or paperboard may be sealed to itself in step c). In such case, a package or container can be produced from a single paper or paperboard by folding or rolling the paper or paperboard followed by ultrasonic sealing. Alternatively, the coated paper or paperboard is sealed to a second paper or paperboard in step c). In such case, a package or container can be produced without the need for folding any of the papers/paperboards. Moreover, production of a package being of different shapes on top and bottom side is facilitated. The surface of the second paper or paperboard provided in step c) may also be coated. In such, case the second paper or paperboard is typically coated with the same type of coating as the coated paper or paperboard.

The wetted portion can be at least part of the topside and/or backside of the coated paper or paperboard. Likewise, the paper or paperboard surface in step c) can be at least part of a back side or a top side. Thereby, the sealing can be made in any of three constellations top side to top side, back side to back side, or top side to back side.

Typically, the coating is a dispersion coating and in such case the binder is a latex. Preferably, the latex is styrene-butadiene (SB) latex, styrene-acrylate (SA) latex, ethylene acrylic acid (EAA) latex, vinyl acetate acrylate copolymer (VAcA) latex, acrylic latex, ethylene vinyl acetate (EVA) latex or mixtures thereof. The latex can be biobased, i.e. derived from biomass, such as biobased styrene-acrylate or styrene-butadiene latex. Biobased latex can provide similar performance and provides improved carbon footprint. In addition to the binder, the dispersion coating may also comprise a co-binder, such as polyvinyl alcohol (PVOH). Typical addition levels of the co-binder is in such case less than 2 pph. The co-binder is added for improved film formation of the coating but it is not necessary to add for provision of the coating.

Alternatively, the binder in the coating may be a water-soluble polymer. In such case the binder preferably is polyvinyl alcohol (PVOH), starch or mixtures thereof.

In any case, within the present disclosure a binder is meant latex or water-soluble polymer. The term "latex" as used herein refers to an aqueous suspension of polymer particles, which can be natural polymers, synthetic polymers, synthetic polymers derived from biomasses or combination thereof. Water-soluble polymers are those polymers that forms solutions instead of dispersions in an aqueous solvent. Accordingly, a dispersion coating formed from a latex is a coating produced from an aqueous dispersion of polymeric particles. After application, the particles form a solid coating after drying.

The coating layers may be applied by the use of roller coating, spray coating, curtain, blade coating, slot coating, immersion coating, gravure roll coating, reverse direct gravure coating, rod coating, soft-tip blade coating and/or combinations thereof. The coating can be produced from one or several coating layers. In the latter case, the composition of each layer may be the same or varied. For the avoidance of doubt, the composition referred to of the coating is the composition of the coating as a whole independently of if there are several coating layers and if these have varied compositions within each layer. An example of a varied composition is where the dispersion coating layer consists of a base coat layer having a certain composition beneficial for covering the surface of the uncoated paper or paperboard and on top of the base coat layer is arranged a top coat layer having a certain composition beneficial for printing and/or barrier properties. Typically, the outer side of a paper or paperboard aimed at being visible to a user is provided more coating layers than the inner side of the paper or paperboard.

The coating may in addition to binder comprise pigments. The pigments are typically selected from calcium carbonate, talc, clay, such as kaolin clay and/or montmorillonite (MMT), and mixtures thereof. In such case, the dry weight ratio of binder to pigment is typically within the range of 0:100 to 200:100, such as 5:100 to 200:100, such as 7:100 to 150:100, such as 7:100 to 100:100. A higher binder to pigment ratio is beneficial for barrier properties, whereas a lower binder to pigment ratio is beneficial for printing properties and appearance. For the avoidance of doubt, the binder to pigment ratio for the coating is calculated based on the whole coating irrespectively of if it was provided as one or several coating layers.

Preferably, the fibres of the paper or paperboard are exclusively cellulose fibres. If synthetic fibres, such as polyester fibres, are used to form part of the paper or paperboard, the environmental impact of the paper is increased which is a disadvantage. Also the repulpability as well as recyclability are impaired. Typically, the cellulose fibres are unmodified, i.e. used as is when provided from pulping. Thereby no chemical moieties have been introduced, e.g. by grafting, to the cellulose fibres. Accordingly, the fibres of the paper or paperboard are preferably exclusively unmodified cellulose fibres. Similarly, it is preferred that no extruded or laminated plastic layer is provided on the part of the paper or paperboard provided in step a) that is to be wetted and sealed.

The density of the coated paper or paperboard measured according to ISO 534:2011 may be 600-1400 kg/m³, such as 600-900 kg/m³, such as 650-850 kg/m³. Such density is beneficial for provision of paper or paperboard having desirable mechanical stability. In particular for coated paper, the density may be in the higher end of the range.

Typically, the grammage measured according to ISO 536:2020 of the coated paper is at least 40 g/m², such as 40-140 g/m². Typically, the grammage measured according to ISO 536:2020 of the coated paperboard is at least 110 g/m², such as 110-500 g/m². The difference between paper and paperboard is not only based on grammage, there are for example heavier paper grades having a grammage of around 135 g/m², such as machine-finished (MF) papers. Likewise, there are linerboards, being paperboards, having a grammage of about 120 g/m².

In case of a coated paper, the seal strength of the sealing is typically at least 1.2 N, such as at least 1.5 N measured according to ASTM F88 on a 15 mm test strip with unsupported 90 degree angle at a speed of 100mm/min. The seal strength is the tensile strength produced in the joining point in N using a constant rate of elongation of 100 mm/min.

In case of a coated paperboard, the seal strength of the sealing is typically at least 2.5 N, such as at least 3.0 N measured according to ASTM F88 on a 15 mm test strip with unsupported 90 degree angle at a speed of 100mm/min. The seal strength is the tensile strength produced in the joining point in N using a constant rate of elongation of 100 mm/min.

As a second aspect of the present disclosure there is provided a method of forming a sealed package or container, wherein the method comprises the following steps:
i. providing a paper or paperboard coated with a coating comprising a binder;
ii. forming a package or container by folding the paper or paperboard;
iii. wetting part of the paper or paperboard with water; and
iv. sealing the wetted part to a paper or paperboard surface by ultrasonic sealing to create a seal, wherein the total coat weight in the formed sealing is ≤ 35 g/m².

The package or container may comprise a sealing and a product within the package or container, wherein the sealing is arranged so that a product is sealed within the package or container. In such embodiment, the product is enclosed inside the sealed package independently on which direction the package is arranged in. Example of such package is a closed sealed pouch sealed all around the product. Alternatively, the package or container is folded around the product and the open edges being sealed. In yet another alternative, the paper or paperboard is sealed and thereafter folded followed by provision of the product to be contained therein and final sealing of the package or container.

An example of a package is a tube. In such case, a coated paper or paperboard is provided and rolled and wetted. Thereafter the roll is sealed longitudinally and a tube lid portion is provided in one of the open ends leaving only one end open. In a following step the product is inserted into the package through the open end, which is subsequently sealed by wetting and ultrasonic sealing and thereby forming a tube with a total coat weight in the seal according to the present disclosure.

Another example of a package is a flow-wrapped product. In such case a coated paper is provided and the paper is formed by folding the paper over a product. Subsequently, two end seals are formed in the ends and one fin-seal is formed longitudinally by wetting followed by ultrasonic sealing so that a flow-wrapped product is provided with a total coat weight in the seal according to the present disclosure.

Yet another example of a package is a folded paper or paperboard box. In such case a coated paper or paperboard blank is provided and the blank is formed by folding into a box. Subsequently, the box is sealed by wetting followed by ultrasonic sealing. Alternatively, the blank is wetted prior to folding into a box and thereafter sealed directly.

Depending on the type of package or container to be formed, steps ii. and iii. Can be conducted in the order of forming a package or container followed by wetting, i.e. step ii. prior to step iii. Alternatively, the wetting can be conducted first followed by folding, i.e. step iii. Prior to step ii.

In an alternative embodiment, the package or container comprises a sealing arranged so that the package or container is partly open so that a product can be inserted and removed without breaking the sealing or the package or container. Example of such package is a bag sealed on all sides but one leaving an opening, or a folded paper sealed on one edge leaving an opening.

The examples and embodiments discussed above in connection to the first aspect apply to the second aspect *mutatis mutandis.*

As a third aspect of the present disclosure there is provided a package or container comprising the sealed paper or paperboard according to the first aspect of the present disclosure.

Typically, such package or container does not contain any extruded or laminated plastic layer, and thereby the repulpability is facilitated since binder coatings are repulpable to a greater extent than extruded or laminated plastic layer. Moreover, the overall content of plastics is also eliminated or reduced.

The examples and embodiments discussed above in connection to the first, and second aspects apply to the third aspect *mutatis mutandis.*

### EXAMPLES

Coated papers and paperboards were evaluated. No synthetic fibres were used in the papers or paperboards. The paper or paperboards were wetted with water (8 µl) on an area of 5×15 mm and sealed using ultrasonic joining by the device described in US 9,399,335 B2 at a pressure of 2-5 bar for a joining time of 150-600 msec.

Moreover, the fibre tear was evaluated. Fibre tear is a measure of how strong the seal is. If no fibre tear is obtained, the seal has failed within the seal itself leaving the papers intact, a so-called adhesive failure. On the other hand, if the seal is stronger than the paper, the rupture will occur within the paper in a so-called cohesive failure. In the latter case fibres are visibly torn out, which is referred to as fibre tear. Hence, the stronger the seal, the more fibre tear is shown.

The specification of the coatings of the paperboard and paper are shown below in Table 1. For each substrate, paper or paperboard, the composition of base coat and top coat on the top side together with respective grammage as well as composition of coating on the back side and with which grammage is presented. For the avoidance of doubt, the grammages of the coatings on the top side refers to the base coat and top coat in that order.

The paperboard has a grammage of 220 g/m² and consists of a three-ply board, wherein the top ply is made from bleached chemical pulp, the back ply is made from bleached chemical pulp and the middle ply is made from a mixture of bleached chemical pulp and bleached Chemi-ThermoMechanical Pulp (CTMP).

The paper was made of bleached chemical pulp.

**Table 1. Specification of the coatings of the paperboards and papers.**

| | Top side | | | Back side | |
|---|---|---|---|---|---|
| | Base coat (pph) | Top coat (pph) | Grammage (g/m²) | Coating (pph) | Grammage (g/m²) |
| Paperboard | Kaolin: 5 | Kaolin: 25 | 13 + 10 | Kaolin: 5 | 7 |
| | CC: 95 | CC: 75 | | CC: 95 | |
| | SB-latex: 16 | SB-latex: 16 | | SB-latex: 16 | |
| | PVOH: 0.85 | PVOH: 0.85 | | PVOH: 0.85 | |
| | | | | | |
| Paper | Kaolin: 100 | Talc: 100 | 7.5 + 7.5 | Uncoated | 0 |
| | SB-latex: 75 | EAA-latex: 60 | | | |

The paperboard had a latex:pigment ratio of 16:100, which is a ratio beneficial for printing properties and appearance. The paper had a latex:pigment ratio of 68:100 which is a ratio beneficial for barrier properties. It is reasonable to assume that an increased latex content, or in case the coating would be void of pigments, the seal-properties would not be impaired.

The sealed paperboards and papers were thereafter evaluated with respect to how strong seal that could be produced. Two paperboards or papers were sealed together. The test orientation of the sealing was varied and seals were produced between top sides (T/T), between a top side and a back side (T/B) or between two back sides (B/B).

The following properties were evaluated and with each unit in parenthesis following respective property. Seal strength (N) was evaluated according to ASTM F88 on 15 mm test strips with unsupported 90 degree angle at a speed of 100mm/min, fibre tear (%) using visual inspection and grammage (g/m²) according to ISO 536:2020.

All evaluated properties are listed together with corresponding test method in Table 2 below.

**Table 2. Seal properties of sealed paperboards and papers.**

| | Test orientation | Force (N) | Fibre tear (%) | Total coat weight in the seal (g/m²) |
|---|---|---|---|---|
| Paperboard | T/T | 1.4 | 100 | 46 |
| | T/B | 2.6 | 100 | 30 |
| | B/B | 3.0 | 100 | 14 |
| | | | | |
| Paper | T/T | 1.3 | 100 | 30 |
| | T/B | 1.7 | 100 | 15 |
| | B/B | 1.9 | 100 | 0 |

Naturally, papers have a lower seal strength than paperboards since they are thinner and weaker. Therefore, comparison has to be made in between paperboards and in between papers.

For the paper, the highest seal strength is obtained when two uncoated surfaces are sealed together, i.e. a total coat weight in the seal of 0 g/m². The paperboard also being coated on the backside, follows the same trend.

For paperboards, a seal strength of above 2.5 N in combination with 100% fibre tear is desirable as such seal strength has proven to suffice for paperboard packages. In case of the tested paperboard being sealed top side to top side, the seal strength is, consequently too low and there is a risk that a packaging produced with such seal strength will break during handling.

For the paper, a seal strength of above 1.2 N in combination with 100% fibre tear is desirable as such seal strength has proven to suffice for paper packages. Thereby, the paper having a thin enough coating on the coated side can be sealed between two coated sides and yet provide a sufficiently high seal strength.

The inventors have thereby realized that coated surfaces of paper or paperboard can be sealed with ultrasonic sealing and provide a sufficiently strong seal if the total coat weight in the seal is kept at ≤ 35 g/m².

## Claims

1. A method of ultrasonic sealing of a coated paper or paperboard, wherein the method comprises the following steps:
a) providing a paper or paperboard coated with a coating comprising a binder;
b) wetting at least part of the coating with water; and
c) sealing a wetted portion of the coating from step b) to a paper or paperboard surface by ultrasonic sealing to create a seal, wherein the total coat weight in the formed sealing is ≤ 35 g/m².

2. The method of claim 1, wherein the paper or paperboard is sealed to itself in step c).

3. The method of claim 1, wherein the paper or paperboard is sealed to a second paper or paperboard in step c).

4. The method of any one of the preceding claims, wherein the coating is a dispersion coating and the binder is a latex, such as styrene-butadiene (SB) latex, styrene-acrylate (SA) latex, ethylene acrylic acid (EAA) latex, vinyl acetate acrylate copolymer (VAcA) latex, acrylic latex, ethylene vinyl acetate (EVA) latex or mixtures thereof.

5. The method of any one of the preceding claims, wherein the binder in the coating is a water-soluble polymer, such as polyvinyl alcohol (PVOH), starch or mixtures thereof.

6. The method of any one of the preceding claims, wherein the coating comprises pigments.

7. The method of claim 6, wherein the pigments are selected from calcium carbonate, talc, clay, such as kaolin clay, and mixtures thereof.

8. The method of claims 6 or 7, wherein the dry weight ratio of binder to pigment is within the range of 0:100 to 200:100, such as 5:100 to 200:100, such as 7:100 to 150:100.

9. The method of any one of the preceding claims, wherein the total coat weight in the formed sealing is ≤ 30 g/m².

10. The method of any one of the preceding claims, wherein the fibres of the paper or paperboard are exclusively cellulose fibres.

11. The method of any one of the preceding claims, wherein the coating is arranged on a layer of the paper or paperboard comprising at least 90 % by dry weight of chemical pulp, such as at least 95 % by dry weight of chemical pulp.

12. The method of any one of the preceding claims, wherein the density of the coated paper or paperboard measured according to ISO 534:2011 is 600-1400 kg/m³, such as 600-900 kg/m³, such as 650-850 kg/m³.

13. The method of any one of the preceding claims, wherein no extruded or laminated plastic layer is provided on the part of the paper or paperboard provided in step a) that is to be wetted and sealed.

14. A method of forming a sealed package or container, wherein the method comprises the following steps:
i. providing a paper or paperboard coated with a coating comprising a binder;
ii. forming a package or container by folding the paper or paperboard;
iii. wetting part of the paper or paperboard with water; and
iv. sealing the wetted part to a paper or paperboard surface by ultrasonic sealing to create a seal, wherein the total coat weight in the formed sealing is ≤ 35 g/m².

15. A package or container comprising the sealed paper or paperboard according to any one of the claims 1-13.
